(19)

**Europäisches Patentamt**
**European Patent Office**
**Office européen des brevets**

(11) **EP 4 080 352 B1**

(12) **EUROPEAN PATENT SPECIFICATION**

(45) Date of publication and mention
of the grant of the patent:
**18.10.2023 Bulletin 2023/42**

(21) Application number: **22168334.5**

(22) Date of filing: **14.04.2022**

(51) International Patent Classification (IPC):
**G06F 7/58** (2006.01)     **H04L 9/08** (2006.01)

(52) Cooperative Patent Classification (CPC):
**G06F 7/588; H04L 9/0858**

(54) **RANDOM NUMBER GENERATOR, IN PARTICULAR TRULY RANDOM NUMBER GENERATOR OF AN IMPROVED TYPE**

ZUFALLSZAHLENGENERATOR, INSBESONDERE EIN ECHTER ZUFALLSZAHLENGENERATOR EINES VERBESSERTEN TYPS

GÉNÉRATEUR DE NOMBRES ALÉATOIRES, EN PARTICULIER GÉNÉRATEUR DE NOMBRES VÉRITABLEMENT ALÉATOIRES D'UN TYPE AMÉLIORÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.04.2021 IT 202100009356**

(43) Date of publication of application:
**26.10.2022 Bulletin 2022/43**

(73) Proprietor: **Fondazione Bruno Kessler**
**38122 Trento (IT)**

(72) Inventors:
• **MASSARI, Nicola**
  **38057 PERGINE VALSUGANA (TN) (IT)**
• **PERENZONI, Matteo**
  **38068 ROVERETO (TN) (IT)**
• **GASPARINI, Leonardo**
  **38057 FRAZ. MADRANO, PERGINE VALSUGANA (TN) (IT)**
• **TONTINI, Alessandro**
  **38052 CALDONAZZO (TN) (IT)**
• **ZOU, Yu**
  **8050 ZURICH (CH)**

(74) Representative: **Marchioro, Paolo**
**Studio Bonini S.r.l.**
**Corso Fogazzaro, 8**
**36100 Vicenza (IT)**

(56) References cited:
**EP-A1- 3 529 694**

• **FABIO ACERBI ET AL: "A Robust Quantum Random Number Generator Based on an Integrated Emitter-Photodetector Structure", IEEE JOURNAL OF SELECTED TOPICS IN QUANTUM ELECTRONICS, vol. 24, no. 6, 1 November 2018 (2018-11-01), pages 1-7, XP055666331, USA ISSN: 1077-260X, DOI: 10.1109/JSTQE.2018.2814787**
• **MASSARI NICOLA ET AL: "16.3 A 16x16 pixels SPAD-based 128-Mb/s quantum random number generator with -74dB light rejection ratio and -6.7ppm/°C bias sensitivity on temperature", 2016 IEEE INTERNATIONAL SOLID-STATE CIRCUITS CONFERENCE (ISSCC), IEEE, 31 January 2016 (2016-01-31), pages 292-293, XP032873608, DOI: 10.1109/ISSCC.2016.7418022 ISBN: 978-1-4673-9466-6 [retrieved on 2016-02-23]**
• **BURRI SAMUEL ET AL: "SPADs for quantum random number generators and beyond", 2014 19TH ASIA AND SOUTH PACIFIC DESIGN AUTOMATION CONFERENCE (ASP-DAC), IEEE, 20 January 2014 (2014-01-20), pages 788-794, XP032570101, DOI: 10.1109/ASPDAC.2014.6742986**

EP 4 080 352 B1

## Description

The present invention relates to a Random Number Generator (RNG), in particular a True Random Number Generator (TRNG) of an improved type.

It is known that, currently, random number generators are used in several applications ranging from the scientific to the cryptographic field.

In the first case the typical example is the computational science in which the generation of a certain number of random initial states that serve as a description of the initial state of the simulation is required.

This type of application generally requires that the initial configurations are not closely related to each other but that they can be reproduced in a deterministic manner in order to verify, for example, the effect of variations on the codes that perform the same simulations. For this reason, these number sequences are more correctly defined as Pseudo Random Numbers (PRN), because they are defined through complex algorithms starting from an initial value. In other words, given an initial random number, known as a "seed" in jargon, a formula, no matter how complex, will always reproduce the same sequence of random numbers. The relative generators are called Pseudo Random Number Generators (PRNG).

On the contrary, in the second case, that is in case of use of random numbers in cryptographic techniques for the execution, for example, of banking operations, this approach proves to be weak as it is necessary to ensure a perfect unpredictability of the sequences generated in order to maintain highly sensitive information secure. In this case, the most secure approach goes through the generation of random numbers obtained from a generation process that is truly random and does not allow the generated sequence to be predicted in any way. These generators are known as truly random number generators (TRNG) and are based on physical phenomena and in particular quantum ones, given the intrinsic unpredictability of these events. In particular, quantum mechanisms, such as for example the generation of photons by a light source, are among the most investigated methods for obtaining such sequences of true random numbers and are based on an indeterminacy of the measured event that is inherent in the properties of the quantum system itself. From the point of view of the information theory, the unpredictability level of the random numbers generated by both of the aforesaid techniques can be expressed by the parameter defined as "entropy", known precisely as the amount of uncertainty or information present in a random variable.

As already mentioned, the use of PRNG for cryptographic purposes is risky, not only because certain algorithms have weaknesses that potentially arise only some time after their introduction, but also because, if an attacker were to recover the seed from which all random sequences are generated, he could predict all the following outputs with absolute certainty based on the same seed.

Therefore, a solution based on physical and in particular quantum phenomena is highly preferable given the aforesaid intrinsic unpredictability of these events, even with subjects with a perfect knowledge of the algorithms used and with a high computing capacity. However, while the algorithms for generating pseudo-random numbers can be chosen to create sequences that have some well-defined statistical properties with absolute certainty, precisely given their deterministic nature, the random numbers obtained starting from physical phenomena must be subject to practical limitations, due for example to variations in the quality of the realisation of the instrumentation, to fluctuations in the power supply, to environmental factors such as external fields and temperature changes. In general, these deviations from the ideal case lead to a departure from a uniform and independent statistical distribution of measurable events in a sample space. Consequently, a lowering of the entropy level of also such true random number generators can be found.

To avoid this, these true random number generators need a further phase, called "post-processing", carried out after the extraction of the sequence of random codes starting from the specific physical phenomenon. In fact, this post-processing phase allows the uniformity of the probability distribution of the sequence of random codes to be improved. However, disadvantageously, this post-processing phase has an impact on the so-called "bit rate" that the generator is able to ensure.

It is also known, as already mentioned above, that one of the physical phenomena that is most exploited for the generation of true random numbers is quantum photonics. For this reason, these generators, which belong to the macro-category of TRNG generators, are also referred to more specifically by the acronym QRNG (Quantum Random Number Generator). In fact, in such generators, an attenuated light source generates few photons (low detected photon stream $\lambda$ value) that are acquired by one or more single photon detectors, implemented in most cases with an integrated component known by the acronym SPAD (Single Photon Avalanche Diode). Moreover, the system provides for special electronics to be located downstream of the aforesaid SPADs, composed of auxiliary circuits and, usually, one or more TDCs (Time to Digital Converter) or of counters, capable of extracting a random sequence of bits from each of these SPADs by measuring the arrival time of the acquired photons or by counting their number.

From the implementation point of view, in these generators the light source and the detector or the detectors are separate devices that need to be properly coupled and shielded. However, disadvantageously, this implementation is evidently not immune to the influence of uncontrolled external environmental effects. Moreover, the fact that the light source and detector(s) are devices that are separate from each other and subsequently coupled makes the whole generator of random numbers quite vulnerable to possible break-ins and tampering.

Also disadvantageously, the above implementation results in a high device cost due to the need to optically align the two devices and make custom packaging to contain them.

A number of QRNG-type random number generators have also been proposed, where both the light source and SPAD detectors are built into a single semiconductor substrate, preferably made of silicon. However, again, disadvantageously, such generators are not able to discriminate between events generated in the SPAD detector, which are directly related to photons generated by a light source, from events generated in the same SPAD detector but related to noisy events considered spurious.

One of the spurious events that most often causes avalanche events in SPAD detectors not directly related to the light source is the so-called "Dark Count Rate" or DCR, in technical jargon.

The term "Dark Count Rate" refers to the probability, in a unit of time, of the generation of the avalanche effect in a SPAD detector due to the thermal generation of carriers in the semiconductor at the sensitive area, in the absence of a photon impacting on that area, hence the term Dark Count (DC), or dark event. Therefore, as stated above, with current QRNG generators it is not possible to distinguish avalanche events in the SPAD detector triggered by such spurious events from those triggered by the impact of a photon directly generated by the light source.

Another phenomenon which, to a lesser extent, could lead to non-correlation between an avalanche effect triggered in a SPAD detector and the stream of photons generated by the light source is "Afterpulsing", which is a further spurious event that can virtually introduce correlation effects between detected events, as it consists of the generation of an avalanche in the SPAD detector due to the release of carriers during a previous avalanche effect.

It is also known that the stream of photons generated by these generators abides by a Poissonian process, in the sense that the acquired events are independent from each other and that the probability of counting $n$ photons within an observation window $T_w$ ideally follows the Poisson distribution:

$$P(x = n) = \frac{e^{-\lambda T_w}(\lambda T_w)^n}{n!}$$

wherein $\lambda$, in fact, indicates the stream of detected photons.

The stream of detected photons $\lambda$, the characteristics of the SPAD detectors and the extraction mode of bits determine the final performance of the generator.

That being said, different types of random number generators based on the QRNG concept are available on the market. These generators, in particular, cover a wide range of applications, ranging from portable USB devices that supply a few hundreds of kbit/s, to large electronic systems capable of guaranteeing a bit rate of hundreds of Mbit/s. Moreover, in literature, different logics and architectures have been proposed configured for the determination of true random number sequences starting from a physical phenomenon, in particular from the detection of photons. Most of them detect the "arrival time" or the number of photons that affect the sensitive surface of the SPAD detector or detectors.

In particular, as regards the technique based on the so-called arrival time, it has been proposed to measure the time between the incidence of a photon and the subsequent one on a single SPAD. However, although this technique allows a high bit rate to be obtained, it has a considerable distortion (bias) due to the fact that, as already mentioned, the source of photons abides by the aforesaid Poissonian process.

To obviate this drawback, the prior art proposes to intervene directly on the source of photons, by appropriately controlling the stream of photons generated by it. This intervention, in particular, provides for varying the driving current of the source of photons so as to make the statistical distribution thereof over time as uniform as possible.

However, disadvantageously, this approach requires the introduction into the generator of random numbers of special electronics able to perform the aforesaid driving of the source of photons, thus leading to an increase in the complexity and dimensions of the same generator.

The present invention intends to obviate the aforesaid drawbacks.

In particular, the aim of the invention is to realise a truly random number generator which guarantees a high level of entropy so as to at least pass the statistical tests established by the NIST (National Institute of Standards and Technology).

In particular, it is the object of the invention to realise a method for distinguishing and filtering spurious events from light events, so as to guarantee with high probability that the only events detected are of quantum and not thermal origin.

In other words, it is the aim of the invention to circumscribe as much as possible the generation of random numbers exclusively as a consequence of those avalanche effects triggered in the detectors which are closely related to the stream of photons generated by the photon source.

A further object of the invention is to realise a truly random number generator which enables a high bit rate to be achieved in the generation of random sequences of bits.

A further object of the invention is to realise a truly random number generator having a more compact, more robust, less complex structure than random number generators of the prior art.

Furthermore, the aim of the invention is to realise a truly random number generator with a high degree of security against any break-ins and tampering with its internal components.

Last but not least, the aim of the invention is to realise a truly random number generator which is cheaper than generators of the prior art.

The said purposes are achieved by the truly random number generator having the characteristics according to the main claim.

The aforesaid objects, together with the advantages that will be mentioned hereinafter, will be highlighted during the description of a preferred embodiment of the invention, which is given by way of non-limiting example with reference to the accompanying drawings, where:

-   Fig. 1 schematically shows the circuit architecture of a first exemplary embodiment of the random number generator of the invention;
-   Fig. 2 shows the cross-section of the semiconductor substrate relative to the exemplary embodiment in Fig. 1, manufactured using the CMOS micro fabrication technique;
-   Fig. 3 schematically shows a top view of the circuit architecture of an alternative embodiment of the random number generator of the invention;
-   Fig. 4 shows the waveforms of the output signals of the first SPAD and the second SPAD belonging to the random number generator of the invention in three different situations;
-   Fig. 5 schematically shows the circuit architecture of the first SPAD associated with a quenching circuit of the invention;
-   Fig. 6 shows the waveforms of the signals involved in the operation of the architecture in Fig. 5;
-   Fig. 7 shows the graph of the relationship between the amplitude of the current of the first SPAD and the photon emission activity of the same first SPAD;
-   Fig. 8 shows a time diagram of the application of the random number extraction technique of the invention;
-   Fig. 9 shows the cross-section of the semiconductor substrate, made by means of a CMOS micro fabrication technique, relating to an alternative embodiment of the random number generator of the invention;
-   Fig. 10 shows a time diagram of the application of the filtering technique for events due to an Afterpulsing phenomenon.

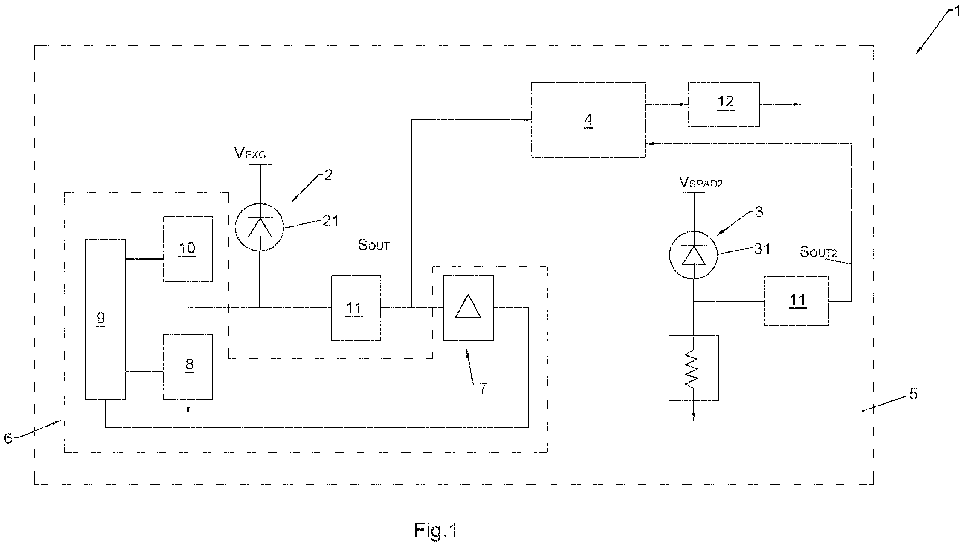

The random number generator of the invention is represented schematically in a first preferred embodiment in Fig. 1, wherein it is indicated overall by **1**.

Said random number generator **1**, according to said first embodiment, comprises, integrated into a single silicon substrate **5**, a photon source **2**, configured to generate a stream of photons, and a photon detector **3**, configured to detect at least one photon of the stream of photons generated by the photon source **2**.

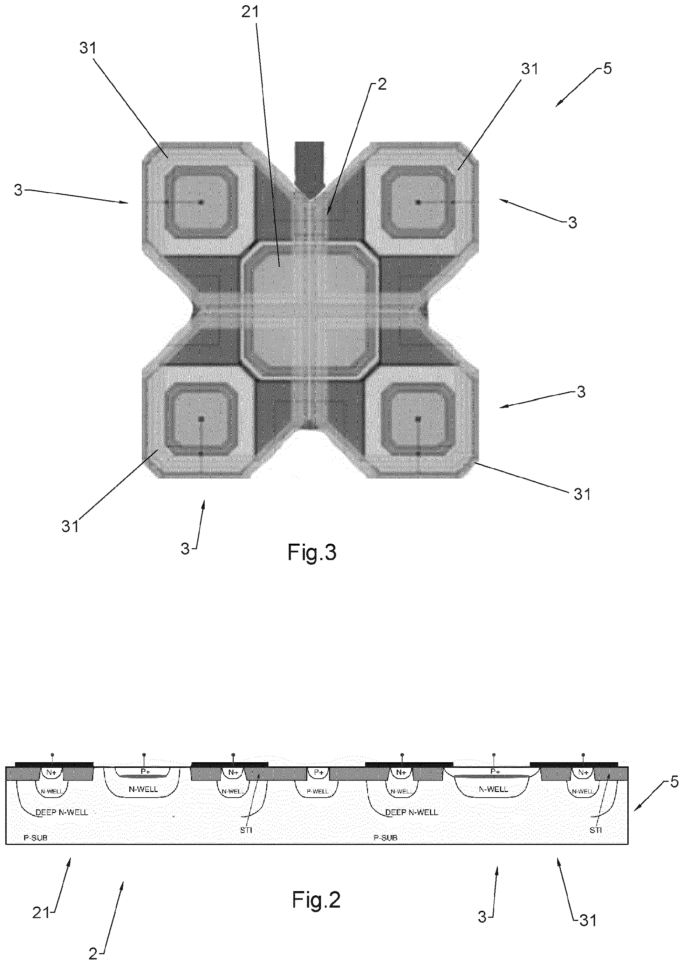

As can be seen in Fig. 2, the photon source **2** and the photon detector **3** are constructed adjacent to each other in this single silicon substrate **5**.

However, it is not excluded that, according to alternative embodiments of the invention, the generator **1** may comprise, integrated into said single silicon substrate **5**, multiple photon sources **2** and/or multiple photon detectors **3**.

In particular, it might be preferable and desirable, in real more highly performing implementations of the random number generator **1** of the invention, to realise in the surroundings of a photon source **2** several photon detectors **3**, as schematically represented in Fig. 3.

According to the preferred embodiment of the invention, electronic control means **4**, operatively connected to said photon source **2** and to said photon detector **3**, are also integrated into said single silicon substrate **5**. It is not excluded, however, that in alternative embodiments of the invention such electronic control means **4** may be implemented externally to said silicon substrate **5**, provided that they are operatively connected to both said photon source **2** and said photon detector **3**.

According to the invention, the photon source **2** comprises a first SPAD **21**, which is configured to emit a stream of photons due to the triggering of an avalanche effect in said first SPAD **21**. Similarly, according to the invention, the photon detector **3** comprises a second SPAD **31** configured to detect at least one photon of the stream of photons generated by the first SPAD **21**.

In particular, such first and second SPADs **21** and **31** are made with substantially the same chemical and physical structure, side by side, as depicted in Fig. 2.

Also according to the invention, the electronic control means **4** are configured to polarize in Geiger mode the first SPAD **21** and the second SPAD **31** with a first polarization voltage **VSPAD1** and a second polarization voltage **VSPAD2,** respectively. In other words, both the first polarization voltage **VSPAD1** and the second polarization voltage **VSPAD2,** imposed at the ends of the first SPAD **21** and the second SPAD **31** respectively, are such as to inversely polarize the latter beyond their breakdown voltage $V_{BD1}$ and $V_{BD2}$.

These first polarization voltage **VSPAD1** and second polarization voltage **VSPAD2** may have the same value or they may have different values.

At this point, before continuing with the description of the random number generator **1** according to the preferred embodiment of the invention, it should be noted that, at the moment when both the first SPAD **21** and the second SPAD **31** are polarized in the aforementioned Geiger mode, an observation window $T_w$ is opened, during which they are in an unstable condition, so that any external phenomenon would be able to trigger an avalanche effect on them, where this external phenomenon could be a photon hitting the sensitive surface of SPADs **21** and **31**, or a noisy Dark Count or Afterpulsing phenomenon.

In the present context, as regards the first SPAD **21**, used as a photon source **2**, as will be seen shortly, it is not important to know which of the above-mentioned phenomena triggered the avalanche effect in it. The decisive aspect in this case is that the flow of current generated and flowing through the P-N junction of the aforementioned first SPAD **21**, due to the triggering of this avalanche effect, in turn generates a stream of photons that diffuses isotropically around this first SPAD **21**.

As regards the second SPAD **31**, used as a photon detector **3**, as seen above, a possible triggering of an avalanche effect in it during this observation window $T_w$ can be determined either by the incidence of one of the photons generated by the first SPAD **21**, due to the optical coupling between the first SPAD **21** and the second SPAD **31**, or by a noisy Dark Count or Afterpulsing phenomenon.

It fact, it is well known that, due to the strong electric field at the ends of the junction, the charges generated and accelerated in the junction itself lead to the isotropic generation of photons, some of which, passing through the silicon, can reach the adjacent SPAD.

Since, as described during the presentation of the prior art, in the context of the generation of truly random numbers it is fundamental to keep the level of entropy high, and since a possible triggering of an avalanche effect in the second SPAD **31** due to one of the aforementioned noise phenomena and not by the incidence of a photon on its sensitive surface would decrease this level of entropy, it is of prime importance to be able to discriminate one from the other.

For this purpose, according to the invention, the electronic control means **4** are operationally connected to the output of the first SPAD **21** and to the output of the second SPAD **31**, so as to detect the output signals generated by the latter, and the same electronic control means **4** are configured to consider as usable for generating a random number, within said observation window $T_w$, exclusively those output signals from the second SPAD **31** due to the triggering of an avalanche effect which occurs within a correlation time window $T_c$, of predetermined duration, starting from the instant in which the same electronic control means **4** detect an avalanche effect in the first SPAD **21**.

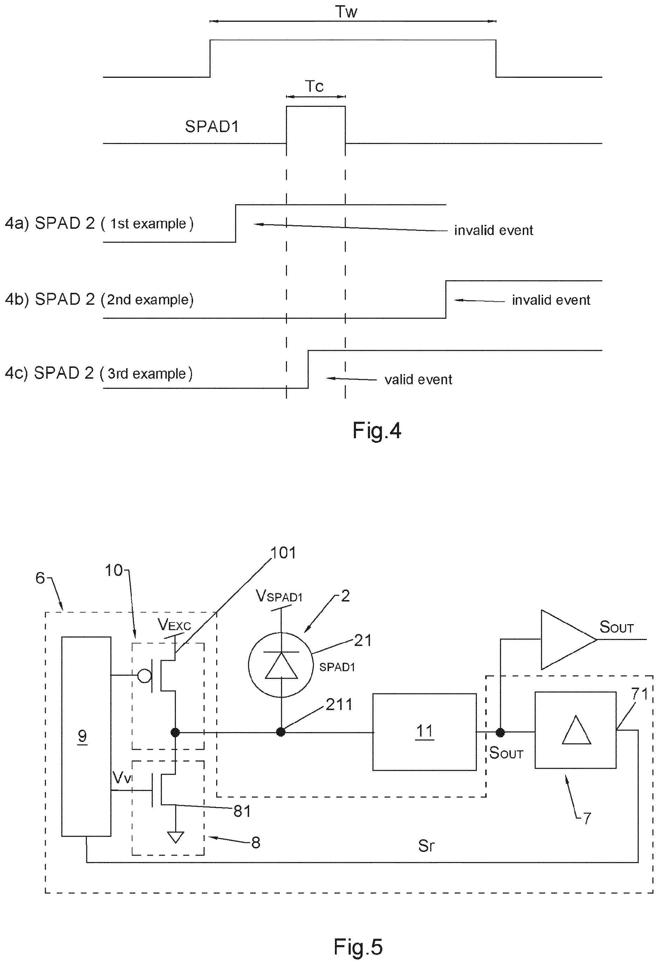

In other words, referring to the waveforms presented in the graph of Fig. 4, in the event that in an observation window $T_w$, which begins when both SPADs **21** and **31** are enabled after a period of dead time, an avalanche effect occurs in the second SPAD **31** before the occurrence of an avalanche effect in the first SPAD **21**, as represented in Fig. 4a, such an avalanche effect in the second SPAD **31** is considered inoperable since it is uncorrelated with the generation of a stream of photons by the first SPAD **21**. Therefore, such detection is excluded for the generation of random numbers.

In the same way, as represented in Fig. 4b, a possible avalanche effect at the second SPAD **31** detected after the triggering of the avalanche effect in the first SPAD **21**, but beyond the pre-established duration of the above-mentioned correlation time window $T_c$, is also considered to be uncorrelated with the stream of photons generated by the first SPAD **21** and therefore, also in this case, such an event is excluded for the generation of a random number. Differently, in the case where the avalanche effect triggered in the second SPAD **31** is detected after the triggering of an avalanche effect in the first SPAD **21**, within the aforementioned correlation time window $T_c$, as graphically represented in Fig. 4c, then, in this case, the electronic control means **4** of the generator **1** of the invention are configured to judge such avalanche effect in the second SPAD **31** to be valid for generating a random number.

In this way, it is advantageously possible to actually identify the triggers of the avalanche effects in the second SPAD **31** with excellent probability determined and correlated to the incidence, due to the aforementioned optical coupling, of at least one photon generated by the first SPAD **21**.

Consequently, advantageously, with this expedient of the invention, it is possible to identify and select as valid only those avalanche effects generated in the second SPAD **31** related to the emission of photons by the first SPAD **21**.

Preferably, but not necessarily, the duration of such a correlation time window $T_c$ is chosen around 1-2 nanoseconds.

Further, according to the preferred embodiment of the invention, said electronic control means **4** are also configured to validate the output signals of the first SPAD **21**, so as to ensure that any avalanche events and thus photons generated in said SPAD **21** only occur after a certain time with respect to the pre-charge phase of the same first SPAD **21**, wherein said pre-charge provides that the voltage at the ends of the junction of the SPAD **21** changes from a condition **VSPAD1 < Vbreakdown** to a condition **VSPAD1 = Vbreakdown** + **Vexc.**

This feature enables unwanted events the be filtered on the aforesaid first SPAD **21** due to Afterpulsing. In fact, due to its physical origin, in general, the Afterpulsing event has a higher probability of occurring during or immediately after the SPAD pre-charge.

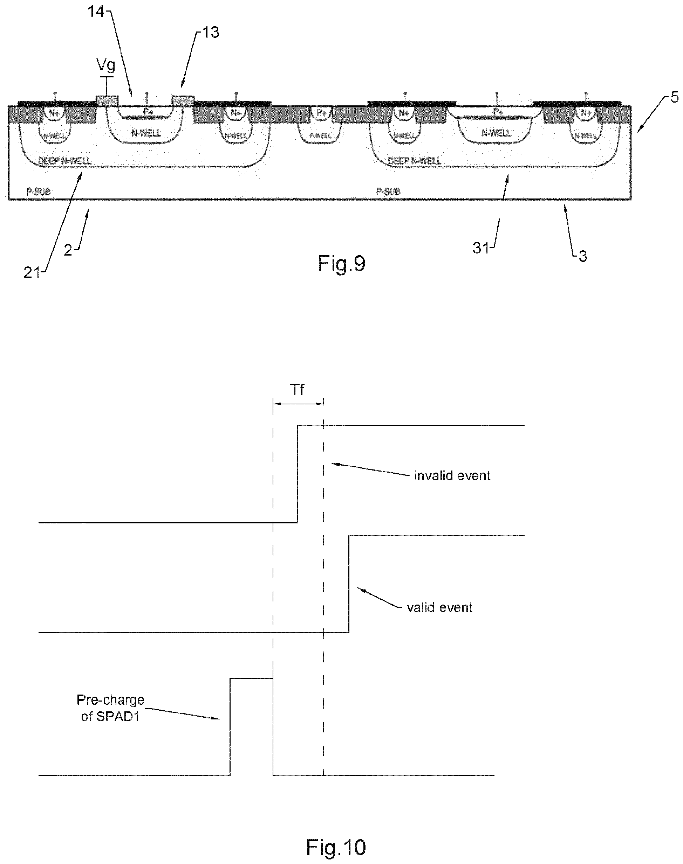

Therefore, a way to overcome the problem of Afterpulsing is just to discard and therefore not to consider a *priori,* as depicted in Fig. 10, all those events that occur within a time window $T_f$ of pre-established duration immediately after the pre-charging phase of the first emitter SPAD **21**.

Preferably, such a window can be chosen with a duration around a few nanoseconds.

Another aspect of the random number generator **1** of the invention relates to providing, integrated into said single silicon substrate **5**, a first quenching circuit **6** operatively connected to the first SPAD **21**, wherein said first quenching circuit **6** comprises, as schematically represented in Fig. 5:

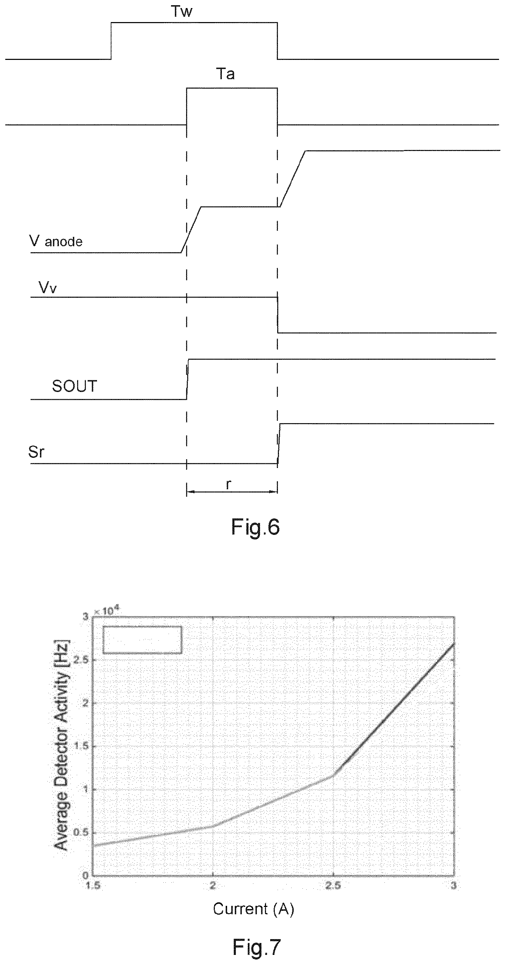

- a delay circuit block **7,** operatively connected to the anode terminal **211** of the first SPAD **21** and configured to provide at an own output **71** a delayed signal **Sr,** corresponding to a copy of the output signal **Sout** received by the first SPAD **21** with a time delay **r** of a predetermined entity, as represented by the waveforms of the graph of Fig. 6;
- a variable impedance circuit block **8,** operatively connected to the anode terminal **211** of the first SPAD **21,** where the variable impedance circuit block **8** is configured to vary the equivalent impedance value seen at the anode terminal **211,** based on a polarization voltage **Vv** received as input;
- a logic unit **9** configured to receive as input the aforesaid delayed signal **Sr** and to polarize, by means of this polarization voltage **Vv,** the variable impedance circuit block **8** so that:

  - the equivalent impedance seen at the anode terminal **211** assumes an intermediate value between an essentially null value and a maximum value, where this intermediate value is suitable for determining the passage of a given avalanche current in the first SPAD **21** during an avalanche event; this intermediate value is established from the moment when an observation window $T_w$ is opened and is maintained as long as the value of the delayed signal **Sr** does not denote a detection of an avalanche in the first SPAD **21**; in other words, the passage of a given avalanche current in the first SPAD **21** takes effect from the actual triggering of such an avalanche in the first SPAD **21** for an emission window $T_a$ of a duration equal to the aforementioned time delay r of the delayed signal **Sr**;
  - the equivalent impedance seen at the anode terminal **211** assumes the aforesaid maximum value so as to force the quenching of the avalanche effect established in the first SPAD **21**; this maximum value is imposed by such logic unit **9** when the value of the delayed signal **Sr** denotes a detection of an avalanche effect in the aforesaid first SPAD **21.**

This expedient of the invention advantageously allows the activity by the first SPAD **21** of emitting the stream of photons to be prolonged for a prolonged time (corresponding to the aforementioned emission window $T_a$, i.e., the aforementioned time delay **r** imposed on the output signal **Sout**). In fact, it is known that, by forcing the passage of avalanche current through the P-N junction of the first SPAD **21** for a certain time, there is a prolongation of photon emission activity by the first SPAD **21** itself. Thus, in this way the amount of photons emitted and the duration of their emission at the avalanche are controlled. This phenomenon has been experimentally verified by the applicant, and the results obtained can be appreciated in the graph in Fig. 7, where it can be observed that the amplitude of the current affects the photon emission activity by the first SPAD **21**.

Consequently, such a prolongation of photon emission upon an avalanche effect in the first SPAD **21** increases the number of avalanche triggers in the second SPAD **31** considered valid, i.e. related to the emission of such photons by the first SPAD **21**.

Preferably, such delay imposed on the output signal **Sout** by the first SPAD **21** and, therefore, the duration of such emission window $T_a$ are chosen between a few hundred picoseconds to a few nanoseconds.

Subsequent to the closure of said emission window $T_a$, the logic unit **9,** as indicated above, is configured to drive the variable impedance block **8** so as to impose an equivalent impedance on the anode terminal **211** of the first SPAD **21** with a maximum value, so as to force the quenching of the avalanche effect, as for a quenching circuit of known type.

Still preferably, but not necessarily, the variable impedance circuit block **8** is implemented by means of a transistor **81** configured to be polarized by said polarization voltage **Vv.**

It is not excluded, however, that such a variable impedance circuit block **8** may be implemented by two or more transistors, provided that they are configured to allow the variation of the value of the equivalent impedance as seen from the anode terminal **211,** according to the polarization voltage **Vv** set by the logic unit **9.**

Still preferably, the operational connection between the anode terminal **211** of the first SPAD **21** and the delay circuit block **7** is implemented by means of an interfacing circuit block **11,** known in technical jargon as a "Front End", configured to detect the current signal present in said anode terminal **211** and to generate a digital output signal **Sout,** based on said detection.

Further, according to a preferred embodiment of the invention, the first quenching circuit **6** comprises an inhibition circuit block **10,** operatively connected to the anode terminal **211** of the first SPAD **21** and to a polarization voltage source **Vexc.** The logic unit **9** is configured to also control the inhibition circuit block **10** so that:

- when the inhibition circuit block **10** is activated, said polarization voltage **Vexc** is set at the anode terminal **211,** the value of such voltage **Vexc** being chosen so that:
  **VSPAD1** - **Vexc < Vbreakdown** of the first SPAD **21**;
- when the inhibition circuit block **10** is deactivated, the connection between the polarization voltage source **Vexc** and the anode terminal **211** is broken.

The presence of the aforesaid inhibition circuit block **10** makes it possible to impose a phase of restoration of the initial conditions, known in jargon as "Dead Time", by activating the inhibition circuit block **10,** during which an avalanche effect cannot occur in the first SPAD **21.** Subsequently, by deactivating this inhibition circuit block **10** and grounding the anode terminal **211,** the condition of the first SPAD **21** is restored so that an avalanche effect can be triggered in it, thus reopening the aforementioned observation window **T$_w$**.

Specifically, according to the preferred embodiment of the invention, the inhibition circuit block **10** is also implemented with a transistor **101** configured to be polarized by said logic unit **9.**

Incidentally, it is important to highlight that the proposed solution for the first quenching circuit **6** could itself be claimed without the need for the random number generator **1** and, in particular, the electronic control means **4** to be configured to discriminate the avalanche events triggered in the second SPAD **31,** correlated to the avalanche effects of the first SPAD **21** from those not correlated to the latter, by means of the aforementioned correlation time window **T$_c$.**

In fact, the structure and functionality of this first quenching circuit **6** alone make it possible to obtain a prolongation of the emission activity by a SPAD, independently of any correlation with avalanche effects triggered in other SPADs.

A third aspect of the invention relates to an alternative technique for extracting random numbers from detections of an avalanche effect established in the aforementioned second SPAD **31.**

This technique is particularly effective if avalanche effects in the second SPAD **31** are rare, i.e. if there is a low stream of photons generated by the first SPAD **21** and therefore the probability of having only one valid event per measurement cycle approaches one.

In particular, this third aspect relates to the fact that the random number generator **1** of the invention, according to the preferred embodiment, further comprises electronic sampling means **12** having a sampling frequency of $f_w = 1/T_w$, where **T$_w$**, as already seen, represents the duration of each of the observation windows that follow each other, during which both the first SPAD **21** and the second SPAD **31** are in a condition such that an avalanche effect can be triggered in them.

According to the invention, the observation windows **T$_w$** are divided into consecutive groups **GT$_w$**, each comprising a number *M* of observation windows **T$_w$**. In particular, according to the invention, the number *M* of observation windows **T$_w$** is defined as constant for all the consecutive groups **GT$_w$**.

In addition, each observation window **T$_w$** for each group **GT$_w$** is indexed with an indexing value i proportional to the position taken by that observation window **T$_w$** within its group **GT$_w$**.

In particular, according to the preferred embodiment of the invention, the observation windows **T$_w$** of each group **GT$_w$** are indexed with an integer value *i* between 0 and *M-1*.

It is not excluded, however, that according to different embodiments of the invention the indexing values *i* are different from those of the preferred embodiment, provided, as already mentioned, that they are proportional to the position of each observation window **T$_w$** within the group **GT$_w$**.

It is further specified that such indexing values *i*, according to the invention, are cyclically repeated in the same way for all the groups **GT$_w$**.

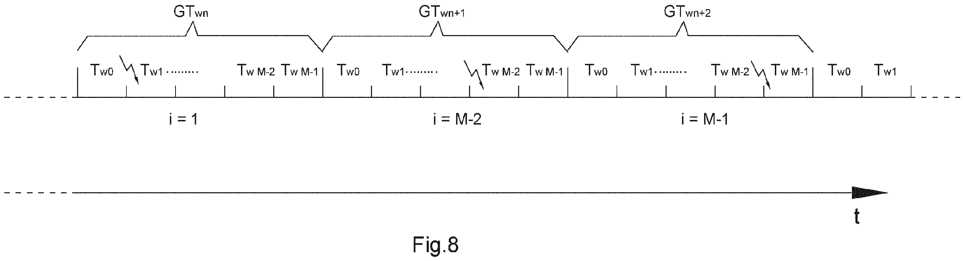

According to the invention, the electronic sampling means **12** are configured to acquire the indexing value *i* of the observation window **T$_w$** in which a triggered avalanche effect was detected in the second SPAD **31**, for each of the groups **GT$_w$**, as schematically depicted in Fig. 8, and to extract a binary sequence based on each of the acquired indexing values *i*.

Advantageously, this expedient, i.e. that of exploiting the indexing value *i* of the observation window **T$_w$** in which an avalanche effect has been detected, rather than using the value of the arrival time of the avalanche effect within said observation window **T$_w$**, as provided by the prior art, allows first of all to make the electronics of the sampling means **12** less complex.

In fact, unlike the electronic sampling means usually used in the prior art, which necessarily include complex TDCs (Time to Digital Converters) capable, precisely, of exploiting the arrival time for the generation of the random number, in the case of the technique of the invention, which envisages exploiting the indexing value *i*, it is sufficient to provide simple logic counters capable of progressively increasing the indexing value *i* relative to the aforementioned observation windows **T$_w$** which follow one another for each group **GT$_w$**.

In addition, the fact of providing logic counters instead of TDCs makes it possible to reduce the power consumption of the random number generator **1**, and also prevents the non-linearities in the operation of the TDCs themselves, which increase as the resolution required to the random number generators increases.

In fact, the use of such TDCs leads to distortions in the distribution of arrival times, which consequently disadvantageously reduce the level of entropy of the random number generator.

Clearly, with the technique of the invention just proposed, the effectiveness and uniformity of the distribution of avalanche effects is achieved if such avalanche effects are rare, i.e. if for each group of observation windows **T$_w$** there is a low stream of photons and therefore the probability of a single avalanche effect is high.

Therefore, in order to ensure this prerogative, according to the invention, the number *M* of observation windows **T$_w$** for each group **GT$_w$** is chosen so that *M < N*, where *N* indicates the number of consecutive observation windows **T$_w$** within which on average only one avalanche effect is observed in said second SPAD **31**.

By way of example, where the number *N* of consecutive observation windows **T$_w$** within which on average only one avalanche effect is observed under specific operating conditions of the generator **1** of the invention is 128 windows, the number *M* of observation windows **T$_w$** of which each group **Gt$_w$** is composed may be chosen as 64. This easily guarantees the above-indicated condition.

Again, it is important to point out that such a random number extraction technique just proposed could itself be the subject of claim without the need for the random number generator **1** and, in particular, the electronic control means **4** to be configured to discriminate the avalanche effects triggered in the second SPAD **31,** which are correlated with the avalanche effects of the first SPAD **21** from those not correlated with the latter, by means of the aforementioned correlation time window **T$_c$.**

In fact, the extraction technique described above allows per se for obtaining greater uniformity and linearity in the extraction of random numbers, thus maintaining a high level of entropy in the system in which this mode is implemented, while reducing the complexity of the electronics and its power consumption.

A further aspect of the invention involves the introduction of techniques to optimize the optical coupling between emitter and receiver.

The first technique is to provide a metal shield above the emitter and receiver that allows (vertical) photons to reflect the light to be then detected by the detector. In fact, this technique makes up for the attenuation of the optical signal otherwise absorbed in the silicon before reaching the receiver.

A second technique involves minimizing the distances between emitter and receiver. This reduction is optimised if the two SPADs **21** and **31** are similar and share the same cathode. However, this is a limiting factor as it is not possible to polarize the emitter with a different voltage from the receiver and therefore it is not possible, as a consequence, to regulate its activity. This last aspect can be overcome by the use of a first SPAD **21** including a perimeter gate.

In particular, as depicted in Fig. 9, this technique envisages that the first SPAD **21** comprises a perimeter gate **13** made of polysilicon above the P-N junction **14** of the same first SPAD **21.** This type of SPAD is known in literature by the acronym PGSPAD (Perimeter-Gated SPAD).

In such a case, according to the invention, the electronic control means **4** are configured to polarize said perimeter gate **13** with a polarization voltage **Vg,** independent of the first polarization voltage **VSPAD1** of the P-N junction **14** of the first SPAD **21** itself, so as to modulate the photon emission activity of said first SPAD **21.**

This solution, according to the preferred embodiment of the invention, is implemented in addition to the first quenching circuit **6.**

However, it is not excluded that this solution, according to different embodiments of the invention, may be implemented alternatively to the first quenching circuit **6.**

In any case, this solution allows the second SPAD **31** to be made on the aforementioned semiconductor substrate **5** very close to the first SPAD **21,** in the order of a few micrometres, so as to increase the optical coupling between the two SPADs **21** and **31,** and at the same time to allow dissimilar operation between the same two SPADs **21** and **31.** In other words, the presence of the aforesaid perimeter gate **13** allows the emission of photons by the first SPAD **21** to be increased, imposing the aforesaid polarization voltage **Vg** on this perimeter gate **13,** without altering the polarization voltages **VSPAD1** and **VSPAD2** of both SPADs **21** and **31,** which in the case of extreme proximity of the aforesaid SPADs **21** and **31** necessarily assume shared values.

A further feature of the generator **1** of the invention consists of providing post-processing electronic means, not shown in the figures, configured to receive as input the binary sequences extracted by the sampling electronic means **12** and to process said binary sequences so as to raise the entropy value per output bit of the generator **1** itself.

Therefore, on the basis of the foregoing, the random number generator **1** of the invention reaches all the prefixed objects.

In particular, the aim of realizing a truly random number generator which guarantees a high level of entropy so as to at least pass the statistical tests established by the NIST (National Institute of Standards and Technology) is achieved.

In particular, it is the object achieved by the invention to realise a method for distinguishing and filtering spurious events from light events, so as to guarantee with high probability that the only events detected are of quantum and not thermal origin.

The aim is therefore achieved of circumscribing as much as possible the generation of the random numbers solely as a result of those avalanche effects triggered in the detectors that are closely related to the stream of photons generated by the photon source.

A further object achieved is the realization of a truly random number generator that enables a high bit rate to be obtained in the generation of random sequences of bits.

A further object achieved is the realization of a truly random number generator having a more compact, more robust, less complex structure than random number generators of the prior art.

Finally, the aim of realizing a truly random number generator with a high degree of security against any break-ins and tampering with its internal components is also achieved.

Finally, the aim of realizing a true random number generator which is cheaper than generators of the prior art is also achieved.

**Claims**

1.    Random number generator (1) of the type comprising, integrated in a single silicon substrate (5):

- at least one photon source (2);
- at least one photon detector (3) configured to detect a stream of photons generated by said photon source (2);
said random number generator (1) further comprising electronic control means (4) operatively connected with said photon source (2) and with said photon detector (3);
where:

- said photon source (2) comprises a first SPAD (21) configured to emit a stream of photons, after triggering an avalanche effect in said first SPAD (21);
- said photon detector (3) comprises a second SPAD (31) configured to detect at least one photon of said stream of photons generated by said first SPAD (21);
- said electronic control means (4) are configured to polarize in Gaiger mode said first SPAD (21) and said second SPAD (31) by means of a first polarization voltage (VSPAD1) and a second polarization voltage (VSPAD2);

**characterized in that** said electronic control means (4) are further operatively connected to the output of said first SPAD (21) and to the output of said second SPAD (31) so as to receive the output signals (Sout, Sout2) generated by avalanche effects triggered in said first SPAD (21) and in said second SPAD (31) respectively, said electronic control means (4) being configured to consider as valid for generating a random number exclusively the output signals (Sout2) from said second SPAD (31) generated by avalanche effects triggered in said second SPAD (31) within a correlation time window ($T_c$), of predetermined duration, starting from the instant in which said electronic control means (4) have detected an avalanche effect in said first SPAD (21).

2. Random number generator (1) according to claim 1, **characterized in that** said electronic control means (4) are integrated into said single silicon substrate (5).

3. Random number generator (1) according to any one of the preceding claims, **characterized in that** it provides, integrated into said single silicon substrate (5), a first quenching circuit (6) operatively connected to said first SPAD (21), said first quenching circuit (6) comprising:

- a delay circuit block (7), operatively connected to the anode terminal (211) of said first SPAD (21) and configured to provide at an output (71) thereof a delayed signal (Sr) corresponding to a copy of said output signal (Sout) received from said first SPAD (21) with a time delay (r) of a predetermined entity;

- a variable impedance circuit block (8) operatively connected to the anode terminal (211) of said first SPAD (21), said variable impedance circuit block (8) being configured to vary the equivalent impedance value seen at said anode terminal (211) based on a polarization voltage (Vv) received as input;
- a logic unit (9) configured to receive as input said delayed signal (Sr) and to polarize by means of said polarization voltage (Vv) said variable impedance circuit block (8) such that:

- said equivalent impedance seen at said anode terminal (211) assumes an intermediate value between a substantially null value and a maximum value, wherein said intermediate value is suitable for determining the passage of an avalanche current in said first SPAD (21) during an avalanche effect; said intermediate value being established from the moment when an observation window ($T_w$) is opened and being maintained until the value of said delayed signal (Sr) does not denote a detection of an avalanche effect in said first SPAD (21);
- said equivalent impedance seen at said anode terminal (211) assumes said maximum value so as to force the quenching of the avalanche effect originated in said first SPAD (21); said maximum value being imposed at the moment when the value of said delayed signal (Sr) denotes an avalanche effect being detected in said first SPAD (21).

4. Random number generator (1) according to claim 3, **characterized in that** said variable impedance circuit block (8) comprises one or more transistors (81) configured to be polarized by said polarization voltage (Vv).

5. Random number generator (1) according to any one of claims 3 or 4, **characterized in that** said first quenching circuit (6) comprises an inhibition circuit block (10) operatively connected to said anode terminal (211) of said first SPAD (21) and to a polarization voltage source (Vexc), said logic unit (9) being configured to control said inhibition circuit block (10) so that:

- when said inhibition circuit block (10) is activated, said voltage (Vexc) is imposed on said anode terminal (211), said voltage value (Vexc) being selected so that:
VSPAD1 - Vexc < Vbreakdown of said first SPAD (21);
- when said inhibition circuit block (10) is deactivated, the connection between said polarization voltage source (Vexc) and said anode terminal (211) is broken.

6. Random number generator (1) according to any one of the preceding claims, **characterized in that** said electronic control means (4) are configured to validate the output signals of said first SPAD (21), said validation providing to discard avalanche events occurring in said first SPAD (21) within a time window ($T_f$) of predetermined duration immediately after the pre-charge phase of said first SPAD (21), wherein said pre-charge phase provides that the voltage at the ends of the junction of said first SPAD (21) passes from a VSPAD1 < Vbreakdown condition to a VSPAD1 = Vbreakdown + Vexc condition.

7. Random number generator (1) according to claim 3, **characterized in that** said operative connection between said anode terminal (211) of said first SPAD (21) and said delay circuit block (7) is actuated by means of an interfacing circuit block (11) configured to detect the current signal present in said anode terminal (211) of said first SPAD (21) and to generate an output digital signal (Sout) based on said detection.

8. Random number generator (1) according to any of the preceding claims, **characterized in that** it comprises electronic sampling means (12) with sampling frequency equal to $f_w = 1/T_w$, $T_w$ being the duration of each of the observation windows ($T_w$) following one another, where said observation windows ($T_w$) are divided into consecutive groups ($GT_w$), each one comprising a number $M$ of observation windows ($T_w$), each one of said observation windows ($T_w$) being indexed with an indexing value $i$ proportional to the position assumed by said observation window ($T_w$) within its own group ($GT_w$), said indexing values $i$ being cyclically repeated in the same way for said groups ($GT_w$), said electronic sampling means (12) being configured to acquire the indexing value $i$ of the observation window ($T_w$) in which a valid event was detected in said second SPAD (31) for each of said groups ($GT_w$) and to extract a binary sequence based on each of said acquired indexing values $i$.

9. Random number generator (1) according to claim 8, **characterized in that** said number $M$ of observation windows ($T_w$) is defined as constant for all said consecutive groups ($GT_w$), said number $M$ of observation windows ($T_w$) for each of said groups ($GT_w$) being selected such that $M<N$, where $N$ indicates the number of consecutive observation windows ($T_w$) within which on average only one avalanche effect in said second SPAD (31) is observed.

10. Random number generator (1) according to any one of claims 8 or 9, **characterized in that** said sampling electronic means (12) comprise one or more counters to define indexing of said observation windows ($T_w$) of each of said groups ($GT_w$).

11. Random number generator (1) according to any one of the preceding claims, **characterized in that** said first SPAD (21) comprises a perimeter gate (13) made of polysilicon above the junction P-N (14) of said first SPAD (21), said electronic control means (4) being configured to polarise said perimeter gate (13) with a polarisation voltage (Vg) independent from the first polarisation voltage (VSPAD1) of said junction P-N (14) of said first SPAD (21), so as to modulate the output activity of photons of said first SPAD (21).

**Patentansprüche**

1. Zufallszahlengenerator (1) des Typs, der in ein einziges Siliziumsubstrat (5) integriert ist, Folgendes umfasst:

   - mindestens eine Photonenquelle (2);
   - mindestens einen Photonendetektor (3), der so ausgebildet ist, dass er einen von der Photonenquelle (2) erzeugten Photonenstrom erfasst;
   wobei der Zufallszahlengenerator (1) ferner elektronische Steuermittel (4) umfasst, die mit der Photonenquelle (2) und dem Photonendetektor (3) operativ verbunden sind;
   wobei:

     - die Photonenquelle (2) einen ersten SPAD (21) umfasst, der so ausgebildet ist, dass er nach Auslösung eines Lawineneffekts in dem ersten SPAD (21) einen Photonenstrom emittiert;
     - der Photonendetektor (3) einen zweiten SPAD (31) umfasst, der so ausgebildet ist, dass er mindestens ein Photon des von dem ersten SPAD (21) erzeugten Photonenstroms erfasst;
     - die elektronischen Steuermittel (4) so ausgebildet sind, dass sie den ersten SPAD (21) und den zweiten SPAD (31) mittels einer ersten Polarisationsspannung (VSPAD1) und einer zweiten Polarisationsspannung (VSPAD2) im Geiger-Modus polarisieren;

   **dadurch gekennzeichnet, dass** die elektronischen Steuermittel (4) ferner operativ mit dem Ausgang des ersten SPADs (21) und mit dem Ausgang des zweiten SPADs (31) verbunden sind, um die Ausgangssignale (Sout, Sout2) zu empfangen, die durch Lawineneffekte erzeugt werden, die in dem ersten SPAD (21) bzw. in dem zweiten SPAD (31) ausgelöst werden, wobei die elektronischen Steuermittel (4) so ausgebildet sind, dass sie ausschließlich die Ausgangssignale (Sout2) von dem zweiten SPAD (31), die durch Lawineneffekte erzeugt werden, die in dem zweiten SPAD (31) ausgelöst werden, innerhalb eines Korrelationszeitfensters (T$_c$) vorbestimmter Dauer als gültig für die Erzeugung einer Zufallszahl betrachten, beginnend mit dem Zeitpunkt, zu dem die elektronischen Steuermittel (4) einen Lawineneffekt in dem ersten SPAD (21) erfasst haben.

2. Zufallszahlengenerator (1) nach Anspruch 1, **dadurch gekennzeichnet, dass** die elektronischen Steuermittel (4) in das einzige Siliziumsubstrat (5) integriert sind.

3. Zufallszahlengenerator (1) nach einem der vorangehenden Ansprüche, **dadurch gekennzeichnet, dass** er eine in das einzelne Siliziumsubstrat (5) integrierte erste Löschschaltung (6) bereitstellt, die mit dem ersten SPAD (21) operativ verbunden ist, wobei die erste Löschschaltung (6) umfasst:

- einen Verzögerungsschaltungsblock (7), der operativ mit dem Anodenanschluss (211) des ersten SPADs (21) verbunden ist und so ausgebildet ist, dass er an seinem Ausgang (71) ein verzögertes Signal (Sr) bereitstellt, das einer Kopie des von dem ersten SPAD (21) empfangenen Ausgangssignals (Sout) mit einer Zeitverzögerung (r) einer vorbestimmten Einheit entspricht;
- einen Schaltungsblock (8) mit variabler Impedanz, der operativ mit dem Anodenanschluss (211) des ersten SPADs (21) verbunden ist, wobei der Schaltungsblock (8) mit variabler Impedanz so ausgebildet ist, dass er den gleichwertigen Impedanzwert, der an dem Anodenanschluss (211) gesehen wird, auf der Grundlage einer als Eingang empfangenen Polarisationsspannung (Vv) variiert;
- eine Logikeinheit (9), die so ausgebildet ist, dass sie als Eingang das verzögerte Signal (Sr) empfängt und mittels der Polarisationsspannung (Vv) den Schaltungsblock (8) mit variabler Impedanz so polarisiert, dass:

- die gleichwertige Impedanz, die an dem Anodenanschluss (211) gesehen wird, einen Zwischenwert zwischen einem im Wesentlichen Nullwert und einem Maximalwert annimmt, wobei der Zwischenwert geeignet ist, den Durchfluß eines Lawinenstroms in den ersten SPAD (21) während eines Lawineneffekts zu bestimmen; wobei der Zwischenwert von dem Zeitpunkt festgelegt wird, wenn ein Beobachtungsfenster (T$_w$) geöffnet wird, und beibehalten wird, bis der Wert des verzögerten Signals (Sr) keine Erfassung eines Lawineneffekts in dem ersten SPAD (21) anzeigt;
- die gleichwertige Impedanz, die an dem Anodenanschluss (211) gesehen wird, den Maximalwert annimmt, um das Löschen des in dem ersten SPAD (21) entstandenen Lawineneffekts zu erzwingen; wobei der Maximalwert in dem Zeitpunkt angelegt wird, wenn der Wert des verzögerten Signals (Sr) einen in dem ersten SPAD (21) erfassten Lawineneffekt anzeigt.

4. Zufallszahlengenerator (1) nach Anspruch 3, **dadurch gekennzeichnet, dass** der Schaltungsblock (8) mit variabler Impedanz einen oder mehrere Transistoren (81) umfasst, die so ausgebildet sind, dass sie durch die Polarisierungsspannung (Vv) polarisiert werden.

5. Zufallszahlengenerator (1) nach einem der Ansprüche 3 oder 4, **dadurch gekennzeichnet, dass** die erste Löschschaltung (6) einen Hemmschaltungsblock (10) umfasst, der operativ mit dem Anodenanschluss (211) des ersten SPADs (21) und mit einer Polarisationsspannungsquelle (Vexc) verbunden ist, wobei die Logikeinheit (9) so ausgebildet ist, dass sie den Hemmschaltungsblock (10) so steuert, dass:

- wenn der Hemmschaltungsblock (10) aktiviert ist, die Spannung (Vexc) an den Anodenanschluss (211) angelegt wird, wobei der Spannungswert (Vexc) so gewählt wird, dass: VSPAD1 - Vexc < Vbreakdown des ersten SPADs (21);
- wenn der Hemmschaltungsblock (10) deaktiviert ist, wird die Verbindung zwischen der Polarisationsspannungsquelle (Vexc) und dem Anodenanschluss (211) unterbrochen.

6. Zufallszahlengenerator (1) nach einem der vorhergehenden Ansprüche, **dadurch gekennzeichnet, dass** die elektronischen Steuermittel (4) so ausgebildet sind, dass sie die Ausgangssignale des ersten SPADs (21) validieren, wobei die Validierung dafür sorgt, dass Lawinenereignisse, die in dem ersten SPAD (21) innerhalb eines Zeitfensters (T$_f$) von vorbestimmter Dauer unmittelbar nach der Vorladephase des ersten SPADs (21) auftreten, verworfen werden, wobei die Vorladephase dafür sorgt, dass die Spannung an den Enden des Übergangs des ersten SPADs (21) von einem Zustand VSPAD1 < Vbreakdown zu einem Zustand VSPAD1 = Vbreakdown + Vexc übergeht.

7. Zufallszahlengenerator (1) nach Anspruch 3, **dadurch gekennzeichnet, dass** die operative Verbindung zwischen dem Anodenanschluss (211) des ersten SPADs (21) und dem Verzögerungsschaltungsblock (7) mittels eines Schnittstellenschaltungsblocks (11) betätigt wird, der so ausgebildet ist, dass er das in dem Anodenanschluss (211) des ersten SPADs (21) vorhandene Stromsignal erfasst und auf der Grundlage dieser Erfassung ein digitales Ausgangssignal (Sout) erzeugt.

8. Zufallszahlengenerator (1) nach einem der vorhergehenden Ansprüche, **dadurch gekennzeichnet, dass** er elektronische Abtastmittel (12) mit einer Abtastfrequenz umfasst, die $f_w = 1/T_w$ ist, wobei $T_w$ die Dauer jedes der aufeinanderfolgenden Beobachtungsfenster ($T_w$) ist, wobei die Beobachtungsfenster ($T_w$) in aufeinanderfolgende Gruppen ($GT_w$) unterteilt sind, von denen jede eine Anzahl $M$ von Beobachtungsfenstern ($T_w$) umfasst, wobei jedes der Beobachtungsfenster ($T_w$) mit einem Indizierungswert $i$ indiziert wird ist, der proportional zu der Position ist, die das Beobachtungsfenster ($T_w$) innerhalb seiner eigenen Gruppe ($GT_w$) einnimmt, wobei die Indizierungswerte $i$ zyklisch auf die gleiche Weise für die Gruppen ($GT_w$) wiederholt werden, wobei das elektronische Abtastmittel (12) so ausgebildet sind, dass sie den Indizierungswert $i$ des Beobachtungsfensters ($T_w$), in dem einen gültigen Ereignis in diesem zweiten SPAD (31) für jede der Gruppen ($GT_w$) erfasst wurde, erhalten und eine Binärreihefolge auf der Grundlage jedes erhaltenen Indizierungswertes $i$ gewinnen.

9. Zufallszahlengenerator (1) nach Anspruch 8, **dadurch gekennzeichnet, dass** die Anzahl $M$ von Beobachtungsfenstern ($T_w$) für alle aufeinanderfolgenden Gruppen ($GT_w$) als konstant definiert ist, wobei die Anzahl $M$ von Beobachtungsfenstern ($T_w$) für jede der Gruppen ($GT_w$) so gewählt ist, dass $M<N$, wobei $N$ die Anzahl von aufeinanderfolgenden Beobachtungsfenstern ($T_w$) anzeigt, innerhalb derer im Durchschnitt nur ein Lawineneffekt in dem zweiten SPAD (31) beobachtet wird.

10. Zufallszahlengenerator (1) nach einem der Ansprüche 8 oder 9, **dadurch gekennzeichnet, dass** die elektronischen Abtastmittel (12) einen oder mehrere Zähler umfassen, um die Indizierung der Beobachtungsfenster ($T_w$) jeder der Gruppen ($GT_w$) zu definieren

11. Zufallszahlengenerator (1) nach einem der vorhergehenden Ansprüche, **dadurch gekennzeichnet, dass** der erste SPAD (21) ein Perimeter-Gate (13) aus Polysilizium über dem Übergang P-N (14) des ersten SPADs (21) umfasst, wobei die elektronischen Steuermittel (4) so ausgebildet sind, dass sie das Perimeter-Gate (13) mit einer Polarisationsspannung (Vg) polarisieren, die von der ersten Polarisationsspannung (VSPAD1) des Übergangs P-N (14) des ersten SPADs (21) unabhängig ist, um die Ausgangsaktivität von Photonen des ersten SPADs (21) zu modulieren.

## Revendications

1. Générateur de nombres aléatoires (1) du type comprenant, intégré dans un unique substrat de silicium (5):

    - au moins une source de photons (2);
    - au moins un détecteur de photons (3) configuré pour détecter un flux de photons généré par ladite source de photons (2);
    ledit générateur de nombres aléatoires (1) comprenant en outre un moyen de commande électronique (4) connecté fonctionnellement à ladite source de photons (2) et audit détecteur de photons (3);
    où:

       - ladite source de photons (2) comprend un premier SPAD (21) configuré pour émettre un flux de photons, après avoir déclenché un effet avalanche dans ledit premier SPAD (21);
       - ledit détecteur de photons (3) comprend un second SPAD (31) configuré pour détecter au moins un photon dudit flux de photons généré par ledit premier SPAD (21);
       - ledit moyen de commande électronique (4) est configuré pour polariser en mode Gaiger ledit premier SPAD (21) et ledit second SPAD (31) au moyen d'une première tension de polarisation (VSPAD1) et d'une seconde tension de polarisation (VSPAD2);

    **caractérisé en ce que** ledit moyen de commande électronique (4) est en outre connecté fonctionnellement à la sortie dudit premier SPAD (21) et à la sortie dudit second SPAD (31) de manière à recevoir les signaux de sortie (Sout, Sout2) générés par les effets d'avalanche déclenchés dans ledit premier SPAD (21) et dans ledit second SPAD (31) respectivement, ledit moyen de commande électronique (4) étant configuré pour considérer comme valides pour la génération d'un nombre aléatoire exclusivement les signaux de sortie (Sout2) dudit second SPAD (31) générés par des effets avalanche déclenchés dans ledit second SPAD (31) dans une fenêtre de temps de corrélation ($T_c$), de durée prédéterminée, à partir de l'instant où ledit moyen de commande électronique (4) a détecté un effet avalanche dans ledit premier SPAD (21).

2. Générateur de nombres aléatoires (1) selon la revendication 1, **caractérisé en ce que** ledit moyen de commande électronique (4) est intégré dans ledit unique substrat de silicium (5).

**3.** Générateur de nombres aléatoires (1) selon l'une quelconque des revendications précédentes, **caractérisé en ce qu'**il fournit, intégré dans ledit unique substrat de silicium (5), un premier circuit d'extinction (6) connecté fonctionnellement audit premier SPAD (21), ledit premier circuit d'extinction (6) comprenant:

    - un bloc de circuit de retard (7), connecté fonctionnellement à la borne d'anode (211) dudit premier SPAD (21) et configuré pour délivrer à sa sortie (71) un signal retardé (Sr) correspondant à une copie dudit signal de sortie (Sout) reçu à partir dudit premier SPAD (21) avec un retard temporel (r) d'une grandeur prédéterminée;
    - un bloc de circuit à impédance variable (8) connecté fonctionnellement à la borne d'anode (211) dudit premier SPAD (21), ledit bloc de circuit à impédance variable (8) étant configuré pour faire varier la valeur d'impédance équivalente observée au niveau de ladite borne d'anode (211) sur la base d'une tension de polarisation (Vv) reçue en entrée;
    - une unité logique (9) configurée pour recevoir en entrée ledit signal retardé (Sr) et pour polariser au moyen de ladite tension de polarisation (Vv) ledit bloc de circuit à impédance variable (8) de sorte que:

        - ladite impédance équivalente vue au niveau de ladite borne d'anode (211) prend une valeur intermédiaire entre une valeur sensiblement nulle et une valeur maximale, ladite valeur intermédiaire étant adaptée pour déterminer le passage d'un courant avalanche dans ledit premier SPAD (21) lors d'un effet avalanche; ladite valeur intermédiaire étant établie à partir du moment où une fenêtre d'observation (T$_w$) est ouverte et étant maintenue jusqu'à ce que la valeur dudit signal retardé (Sr) n'indique pas une détection d'un effet avalanche dans ledit premier SPAD (21);
        - ladite impédance équivalente vue au niveau de ladite borne d'anode (211) prend ladite valeur maximale de manière à forcer l'extinction de l'effet avalanche provenant dudit premier SPAD (21); ladite valeur maximale étant imposée au moment où la valeur dudit signal retardé (Sr) indique un effet avalanche qui est détecté dans ledit premier SPAD (21).

**4.** Générateur de nombres aléatoires (1) selon la revendication 3, **caractérisé en ce que** ledit bloc de circuit à impédance variable (8) comprend un ou plusieurs transistors (81) configurés pour être polarisés par ladite tension de polarisation (Vv).

**5.** Générateur de nombres aléatoires (1) selon l'une quelconque des revendications 3 ou 4, **caractérisé en ce que** ledit premier circuit d'extinction (6) comprend un bloc de circuit d'inhibition (10) connecté fonctionnellement à ladite borne d'anode (211) dudit premier SPAD (21) et à une source de tension de polarisation (Vexc), ladite unité logique (9) étant configurée pour commander ledit bloc de circuit d'inhibition (10) de manière à ce que:

    - lorsque ledit bloc de circuit d'inhibition (10) est activé, ladite tension (Vexc) soit imposée à ladite borne d'anode (211), ladite valeur de tension (Vexc) étant choisie de manière que:
VSPAD1 - Vexc < Vbreakdown dudit premier SPAD (21);
    - lorsque ledit bloc de circuit d'inhibition (10) est désactivé, la connexion entre ladite source de tension de polarisation (Vexc) et ladite borne d'anode (211) soit interrompue.

**6.** Générateur de nombres aléatoires (1) selon l'une quelconque des revendications précédentes, **caractérisé en ce que** ledit moyen de commande électronique (4) est configuré pour valider les signaux de sortie dudit premier SPAD (21), ladite validation permettant d'écarter des événements avalanche se produisant dans ledit premier SPAD (21) dans une fenêtre de temps (T$_f$) de durée prédéterminée immédiatement après la phase de précharge dudit premier SPAD (21), dans lequel ladite phase de précharge prévoit que la tension aux extrémités de la jonction dudit premier SPAD (21) passe d'une condition VSPAD1 < Vbreakdown à une condition VSPAD1 = Vbreakdown + Vexc.

**7.** Générateur de nombres aléatoires (1) selon la revendication 3, **caractérisé en ce que** ladite connexion opérationnelle entre ladite borne d'anode (211) dudit premier SPAD (21) et ledit bloc de circuit de retard (7) est actionnée au moyen d'un bloc de circuit d'interfaçage (11) configuré pour détecter le signal de courant présent dans ladite borne d'anode (211) dudit premier SPAD (21) et pour générer un signal numérique de sortie (Sout) sur la base de ladite détection.

**8.** Générateur de nombres aléatoires (1) selon l'une quelconque des revendications précédentes, **caractérisé en ce qu'**il comprend un moyen d'échantillonnage électronique (12) avec une fréquence d'échantillonnage égale à $f_w = 1/T_w$, $T_w$ étant la durée de chacune des fenêtres d'observation (T$_w$) se succédant, où lesdites fenêtres d'observation (T$_w$) sont divisées en groupes consécutifs (GT$_w$), chacun comprenant un nombre *M* de fenêtres d'observation (T$_w$), chacune desdites fenêtres d'observation (T$_w$) étant indexée par une valeur d'indexation *i* proportionnelle à la position prise par ladite fenêtre d'observation (T$_w$) au sein de son propre groupe (GT$_w$), lesdites valeurs d'indexation *i* étant répétées cycliquement de la même manière pour lesdits groupes (GT$_w$), ledit moyen d'échantillonnage électronique (12) étant configuré pour acquérir la valeur d'indexation *i* de la fenêtre d'observation (T$_w$) dans laquelle un événement valide a été détecté dans ledit second SPAD (31) pour chacun desdits groupes (GT$_w$) et pour extraire une séquence binaire sur la base de chacune desdites valeurs d'indexation i acquises.

9. Générateur de nombres aléatoires (1) selon la revendication 8, **caractérisé en ce que** ledit nombre *M* de fenêtres d'observation (T$_w$) est défini comme constant pour tous lesdits groupes consécutifs (GT$_w$), ledit nombre *M* de fenêtres d'observation (T$_w$) pour chacun desdits groupes (GT$_w$) étant choisi de telle sorte que *M<N*, où *N* indique le nombre de fenêtres d'observation consécutives (T$_w$) au cours desquelles un seul effet d'avalanche dans ledit second SPAD (31) en moyenne est observé.

10. Générateur de nombres aléatoires (1) selon l'une quelconque des revendications 8 ou 9, **caractérisé en ce que** ledit moyen d'échantillonnage électronique (12) comprend un ou plusieurs compteurs pour définir l'indexation desdites fenêtres d'observation (T$_w$) de chacun desdits groupes (GT$_w$).

11. Générateur de nombres aléatoires (1) selon l'une quelconque des revendications précédentes, **caractérisé en ce que** ledit premier SPAD (21) comprend une porte périmétrique (13) en polysilicium au-dessus de la jonction P-N (14) dudit premier SPAD (21), ledit moyen de commande électronique (4) étant configuré pour polariser ladite porte périmétrique (13) avec une tension de polarisation (Vg) indépendante de la première tension de polarisation (VSPAD1) de ladite jonction P-N (14) dudit premier SPAD (21), de manière à moduler l'activité de sortie des photons dudit premier SPAD (21).

Fig.1

Fig.3

Fig.2

Fig.4

Fig.5

Fig.6

Fig.7

Fig.8

14
13
Vg

N+ | P+ | N+ | P+ | N+ | P+ | N+
N-WELL | N-WELL | N-WELL | P-WELL | N-WELL | N-WELL | N-WELL

DEEP N-WELL | DEEP N-WELL

P-SUB | P-SUB

5

2
21
31
3

Fig.9

Tf

invalid event

valid event

Pre-charge
of SPAD1

Fig.10